# EUROPÄISCHE PATENTANMELDUNG

(11) **EP 1 258 542 A2**
(43) Veröffentlichungstag der Anmeldung: **20.11.2002**
(21) Anmeldenummer: 02006990.2
(22) Anmeldetag: 27.03.2002
(51) Int. Cl.: C23C 22/20

(54) **Funktionsbeschichtung und Verfahren zu deren Erzeugug, insbesondere zum Verschleissschutz, Korrosionsschutz oder zur Temperaturisolation**

(30) Priorität: 18.05.2001 DE 10124434
(71) Anmelder: ROBERT BOSCH GMBH, 70442 Stuttgart (DE)
(72) Erfinder: Hruschka, Martin, 74232 Abstatt-Happenbach (DE); Hasenkox, Ulrich, 71254 Ditzingen (DE); Klamt, Guido, 70839 Gerlingen (DE)

(57) **Zusammenfassung**

Es wird eine Funktionsbeschichtung auf einem Substrat vorgeschlagen, die eine anorganische Matrixphase, die möglichst weitgehend aus einem Phosphat besteht, und einen darin eingebetteten Funktionswerkstoff aufweist. Weiter wird ein Verfahren zu deren Erzeugung vorgeschlagen, wobei zunächst mindestens ein Funktionswerkstoff in einer Matrixlösung mit einer flüssigen Komponente und einem Phosphat dispergiert, und die so erzeugte, gelartige Dispersion in Form einer Beschichtung auf das Substrat aufgebracht wird. Danach wird diese Beschichtung mittels einer Wärmebehandlung in die Funktionsbeschichtung mit der anorganische Matrixphase und mit dem darin integrierten Funktionswerkstoff überführt. Die vorgeschlagene Funktionsbeschichtung eignet sich vor allem für den Verschleiß- oder Korrosionsschutz oder für die Temperaturisolation, beispielsweise in der Kraftfahrzeug- oder Wärmetechnik.

## Beschreibung

Die Erfindung betrifft eine Funktionsbeschichtung auf einem Substrat sowie ein Verfahren zu deren Erzeugung nach der Gattung der unabhängigen Ansprüche

### Stand der Technik

Verschleiß und Korrosion von Werkstoffen führen häufig zu einem frühzeitigen Versagen von Bauteilen und Geräten und verursachen so erhebliche Kosten. Um diese Effekte zu unterdrücken, sind eine Reihe von Korrosions- bzw. Verschleißschutzbeschichtungen bekannt. Unter diesen zeichnen sich vor allem solche auf der Basis keramischer Werkstoffe durch ihre Hochtemperaturbeständigkeit, chemische Stabilität gegenüber korrosiven Medien und hohe Härte aus.

Zur Herstellung bzw. Abscheidung keramischer Beschichtungen sind eine Reihe verschiedener Verfahren wie Sputtern, thermisches Spritzen, Detonationsbeschichten, CVD (chemical vapour deposition), PVD (physical vapour deposition) oder das Sol-Gel-Verfahren bekannt. Nachteilig bei diesen Verfahren sind die teilweise hohen Prozesstemperaturen, die zu einer Beeinträchtigung der Eigenschaften des Basiswerkstoffes, d.h. des beschichteten Substrates, führen können, die hohen Prozesskosten, die eine breite Anwendung verhindern, oder die komplexe Beschichtungstechnik, die keine Massenfertigung erlaubt.

Aus EP 0 302 465 A1 ist ein Beschichtungsverfahren bekannt, bei dem eine dünne Aluminiumphosphatschicht als Haftschicht durch chemische oder elektrolytische Abscheidung auf eine Metalloberfläche aufgebracht, und bei 150°C über 30 min eingebrannt wird. Auf dieser hochtemperaturbeständigen Haftschicht wird dort dann eine keramische Beschichtung über ein übliches Beschichtungsverfahren erzeugt. Auf diese Weise wird eine temperaturbeständige Schicht erzielt, die die beschichtete Metalloberfläche auch vor Oxidation schützt.

Aus Q. Yang und T. Troczynski, J. Am. Ceram. Soc., 82, (1999), Seiten 1928 bis 1958, und J. Am. Ceram. Soc., 83, (2000), Seiten 958 bis 960, ist das sogenannte "Composite Sol-Gel-Verfahren" bekannt. Dabei wird durch Einbringen von keramischen Partikeln als Füllstoff in einen Sol-Gel-Prozess die Schwindung der Sole bei der Trocknung und der nachfolgenden Sinterung erheblich verringert. Somit wird im Gegensatz zum reinen Sol-Gel-Prozess die Abscheidung dicker, d.h. 10 µm bis 500 µm dicker Schichten in einem Verfahrensschritt möglich. Zur Verdichtung und Bildung keramischer Bindungen ist jedoch weiterhin eine Sinterung bei 1300°C bis 1400°C erforderlich.

Aus S. Wilson, H. Hawthorne, Q. Yang und T. Troczynski, "Sliding and Abrasive Wear of Composite Sol-Gel Alumina Coated Alumina Alloys", submitted to Surface and Coatings Technology, sind schließlich Beschichtungen aus einem mit keramischen Partikeln gefüllten Al(OH)₃-Sol bekannt, das durch Sprühen oder Tauchen auf Metallproben aufgetragen, und bei 300°C bis 500°C getrocknet wird. Hierbei wird das zunächst in der Beschichtung gelöste Aluminiumhydroxid zumindest teilweise in γ-Al₂O₃ umgewandelt. Anschließend erfolgt dann in einem unabhängigen Verfahrensschritt eine Infiltration der zunächst erzeugten porösen Schicht mit einem Phosphatierbad, so dass ein Teil des trockenen Al(OH)₃-Sol/γ-Al₂O₃-Gemisches durch die in dem Phosphatierbad enthaltene Phosphorsäure in Aluminiummetaphosphat (Al(H₂PO₄)₃) umgewandelt, das durch eine weitere Temperaturbehandlung bei 300°C bis 500°C in unlösliches und temperaturstabiles Aluminiumphosphat (AlPO₄) umgesetzt wird. Das derart zum Teil in der Funktionsbeschichtung erzeugte Aluminiumphosphat wirkt als Bindematrix zwischen keramischen Partikeln und der Metalloberfläche.

Aufgabe der Erfindung war die Bereitstellung einer Funktionsbeschichtung auf einem Substrat bzw. eines Verfahrens zur Erzeugung einer derartigen Funktionsbeschichtung, die ein möglichst breites Einsatzgebiet, insbesondere auf Metallen oder Metalllegierungen wie Stählen, Sintermetallen oder Aluminiumlegierungen aus den Bereichen Automobilbau und Maschinenbau aufweist. Dabei sollte durch möglichst einfache, nasschemische Verfahrenstechnik die Abscheidung der Beschichtung auf dem Substrat bei möglichst niedrigen Temperaturen und möglichst wenigen, insbesondere nur einem Verfahrensschritt, möglich sein. Weiter sollten die Eigenschaften der erzeugten Beschichtungen einfach an das jeweilige Einsatzgebiet anpassbar sein.

### Vorteile der Erfindung

Das erfindungsgemäße Verfahren und die erfindungsgemäß erzeugte Funktionsbeschichtung hat gegenüber dem Stand der Technik den Vorteil, dass sie über einfache nasschemische Verfahrenstechnik auf weitgehend beliebigen, beispielsweise metallischen oder keramischen Oberflächen, bei niedrigen Temperaturen erzeugbar ist, wobei die Beschichtung in einem Verfahrensschritt aus Auftragung, Trocknung und Einbrennen bzw. einer Wärmebehandlung herstellbar ist.

Bei Bedarf ist es überdies vorteilhaft möglich, eine Nachbearbeitung der Oberfläche der erzeugten Beschichtung vorzunehmen, beispielsweise direkt nach der Wärmebehandlung, und diese Nachbearbeitung in das erfindungsgemäße Verfahren zu integrieren. Diese Nachbearbeitung kann beispielsweise ein Polieren oder ein nachträgliches Einbringen einer zusätzlichen Funktion in die Funktionsbeschichtung, d.h. beispielsweise eine Infiltration von Graphit oder eines Gleitlackes in eine Porenstruktur der Funktionsbeschichtung zur Verringerung des Reibwertes, sein.

Insgesamt wird somit ein System aus einer anorganischen Bindermatrix und einem darin eingebundenen Funktionswerkstoff bzw. einer Mischung von Funktionswerkstoffen erzeugt, wobei die Eigenschaften der erzeugten Funktionsbeschichtung in sehr einfacher Weise durch Variation des Funktionswerkstoffes oder der Zusammensetzung der Funktionswerkstoffe an gewünschte Eigenschaftsprofile anpassbar sind.

Schließlich ist die aus dem Stand der Technik bekannte Trennung von Schichtauftrag und chemischer Anbindung der zunächst erzeugten Schicht an das Substrat in zwei separaten Verfahrensschritten bei dem erfindungsgemäßen Verfahren nicht erforderlich.

Insbesondere erfolgt bei bekannten nasschemischen Verfahren zur Herstellung keramischer Schichten die Anbindung der Schicht an die darunter liegende Metalloberfläche entweder erst durch einen Sinterprozess, d.h. beispielsweise eine konventionelle Sol-Gel-Technologie mit anschließender Wärmebehandlung bei hohen Temperaturen, über einen der Erzeugung der eigentlichen Beschichtung vorausgehenden Auftrag einer chemisch gebundenen Konversions- bzw. Haftschicht, oder durch Aufbringen einer keramischen Gel-Schicht, die in einem nachfolgenden, separaten Verfahrensschritt durch eine chemische Reaktion beispielsweise mit einer infiltrierten, verdünnten Phosphorsäure, und anschließendes Einbrennen in die Funktionsschicht transformiert wird. Besonders bei der letzten Verfahrensvariante kann eine Anpassung der Eigenschaften der erzeugten Funktionsbeschichtung an die jeweilige Anwendung nur über die Auswahl des keramischen Werkstoffes erfolgen, d.h. eine weitergehende, gezielte Anpassung der Eigenschaften der Schicht durch einen eingebrachten Funktionswerkstoff ist nicht möglich. Diese Nachteile des Standes der Technik werden durch das erfindunsgsgemäße Verfahren überwunden.

Vorteilhafte Weiterbildungen der Erfindung ergeben sich aus den in den Unteransprüchen genannten Maßnahmen.

So ist vorteilhaft, dass durch das erfindungsgemäße Verfahren eine keramische Beschichtung auf einem metallischen oder keramischen Substrat aufbringbar ist, wobei dieses metallische Substrat beispielsweise aus einem Stahl, einem Sintermetall oder einer Aluminiumlegierung besteht.

Daneben ist vorteilhaft, dass sich das erfindungsgemäße Verfahren auch zur Beschichtung von Bauteilen eignet, die aufgrund ihrer Temperaturempfindlichkeit nur Temperaturen von maximal 500°C bzw. im Fall vieler Werkstoffstähle sogar nur maximal 200°C ausgesetzt sein dürfen.

Besonders vorteilhaft ist, wenn die Matrixphase der erzeugten Funktionsbeschichtung im Wesentlichen, vorzugsweise nahezu ausschließlich oder ausschließlich, einer anorganische Matrixphase aus Aluminiumphosphat ist, in die, je nach Anwendung, verschiedene Funktionswerkstoffe, beispielsweise Aluminiumoxid oder Graphit, eingebettet sind. Derartige Funktionsschichten werden dazu bevorzugt über wasserbasierte Gele oder Dispersionen aus gelöstem Monoaluminiumphosphat und darin dispergierten, pulverförmigen Funktionswerkstoffen auf das zu beschichtende Substrat aufgetragen, getrocknet und bei typischen Temperaturen von 150°C bis 500°C, bevorzugt 200°C bis 400°C, in einem Ofen eingebrannt.

Ein weiterer Vorteil der erzeugten Funktionsbeschichtung und des entwickelten Verfahrens liegt in dessen hoher Flexibilität im Hinblick auf mögliche Anwendungsbereiche, die von verbessertem Verschleißschutz, der Reduzierung des Reibwertes, dem Hochtemperaturkorrosionsschutz, der Hochtemperaturisolation bis hin zur Wärmedämmung reichen.

Besonders geeignet sind die entwickelten Funktionsbeschichtungen für Anwendungen mit mittleren Belastungen, d.h. für Beschichtungen auf Zahnradpumpen in der Dieseleinspritztechnik, für Beschichtungen von Sintermetallgleitlagern und Pumpenkolben, die Hochtemperaturisolation im Bereich der Abgasnachbehandlung, oder der Hochtemperaturkorrosionsschutz an Wärmetauschern in der Klimaregelung und der Wärmetechnik.

Die Anpassung der Eigenschaften der erzeugten Funktionsbeschichtung kann sehr einfach durch Wahl und Menge des zugeführten Funktionswerkstoffes erfolgen. Als Funktionswerkstoffe kommen dabei je nach Anwendung keramische oder oxidische Pulver, beispielsweise Al₂O₃-Pulver, ZrO₂-Pulver für die Wärmedämmung, SiC-Pulver, Cr₂O₃-Pulver für den Verschleißschutz, metallische Pulver, beispielsweise zur gezielten Anpassung des Wärmeausdehnungskoeffizienten der Funktionsbeschichtung an ein Substrat, Graphit-Pulver oder Polymer-Pulver wie Polytetrafluorethylen, Polyethylen oder Polyamid zur Reibwertminderung der Funktionsbeschichtung in Betracht. Schließlich eignen sich auch Zusätze wie SiO₂-Pulver, TiO₂-Pulver, TiN-Pulver, Teflon-Pulver, SiN-Pulver, MoS₂-Pulver, MoSi₂-Pulver oder BN-Pulver. Anstelle von Pulvern können zudem auch faserförmige Werkstoffe wie Kohlefasern oder Whisker eingesetzt werden.

Ein weiterer Vorteil des erfindungsgemäßen Verfahrens liegt darin, dass auf das zusätzliche Vorsehen einer Haftschicht zwischen Funktionsbeschichtung und Substrat verzichtet werden kann. Insofern ist das erfindungsgemäße Verfahren einfacher, schneller und preisgünstiger als bekannte Verfahren.

Die direkte Verwendung von Monoaluminiumphosphat in der zunächst erzeugten Dispersion bzw. Matrixlösung hat gegenüber mit Aluminiumphosphat chemisch gebundenen "Composit Sol-Gel-Schichten" den Vorteil, dass ein deutlich höherer Phosphorgehalt und damit auch ein deutlich höherer Aluminiumphosphat-Anteil in den erhaltenen Schichten realisierbar ist. Auf diese Weise können höhere Härten und eine verbesserte Verschleißbeständigkeit erzielt werden.

Um zu vermeiden, dass das in der zunächst erzeugten Dispersion vorliegende Phosphat, beispielsweise Monoaluminiumphosphat, aus der Dispersion ausfällt, ist vorteilhaft, wenn die Dispersion einen pH-Wert kleiner 4, vorzugsweise kleiner 2,5, aufweist. Überdies ist vorteilhaft, wenn der Anteil der Phosphorsäure in der Matrixlösung zwischen 10 Volumenprozent und 40 Volumenprozent, insbesondere 15 Volumenprozent und 30 Volumenprozent liegt.

Um durch einen derart hohen Säuregehalt bei einigen als Substrat eingesetzten Metalllegierungen auftretende chemische Angriffe der Phosphorsäure auf das Substrat zu vermeiden, kann der erzeugten Dispersion bzw. Matrixlösung bei Bedarf ein Phosphorsäure-Inhibitor oder ein Oxidationsmittel zugesetzt sein. Weiter ist es in einigen Fällen auch vorteilhaft, die Oberfläche eines zu beschichtenden Metalles zunächst beispielsweise über eine konventionelle Phosphatierung zu passivieren.

### Ausführungsbeispiele

Man geht zunächst von einer Matrixlösung mit einer flüssigen Komponente und einem Phosphat aus, in die mindestens ein Funktionswerkstoff dispergiert ist.

Die flüssige Komponente ist beispielsweise Wasser oder eine Mischung von Wasser mit einem organischen Lösungsmittel, insbesondere einem Alkohol oder einem Glykol. Der Funktionswerkstoff wird bevorzugt als pulverförmiger Funktionswerkstoff, insbesondere mit einer mittleren Teilchengröße von 10 nm bis 5 µm, oder als faserförmiger oder whiskerförmiger Funktionswerkstoff eingesetzt.

Als Funktionswerkstoff eignet sich ein Metall, ein Polymer, Graphit, ein Hartstoff, ein Trockenschmierstoff oder eine Keramik, insbesondere Siliziumcarbid, Zirkoniumdioxid, Aluminiumoxid, Siliziumdioxid, Titandioxid, Titannitrid, Teflon, Polytetrafluorethylen, Polyethylen, Polyamid, Bornitrid, Siliziumnitrid, Molybdändisilizid, Molybdändisulfid oder Chromoxid.

Zur Erzeugung des Phosphates in der Matrixlösung wird weiter in diese Phosphorsäure eingesetzt, wobei der Anteil der Phosphorsäure in der Matrixlösung zwischen 10 Volumenprozent und 40 Volumenprozent, insbesondere 15 Volumenprozent und 30 Volumenprozent liegt, sowie eine Metallverbindung, insbesondere eine Verbindung der Metalle Aluminium, Zirkonium, Titan, Eisen, Magnesium oder Kalzium. Dabei wird durch ein chemisches Auflösen der Metallverbindung, die beispielsweise Al(OH)₃, AlOOH, Aluminiumtriisopropylat, Aluminiumtri-sekbutylat, Aluminiumcarbonat, Zirkoniumcarbonat, Zr(OH)₄ oder ZrO₂ ist, in der Phosphorsäure ein Phosphat in der Matrixlösung gebildet.

Im Übrigen kann die so erhaltene Matrixlösung mit der flüssigen Komponente und dem Phosphat aufgrund ihrer Konsistenz auch als Gel bezeichnet werden.

Bevorzugt wird eine Aluminiumverbindung wie AlOOH oder Al(OH)₃ als Metallverbindung eingesetzt, so dass sich mit der Phosphorsäure ein Monoaluminiumphosphat bildet. Dabei ist darauf zu achten, dass der pH-Wert in der Matrixlösung kleiner 4, insbesondere kleiner 2,5, ist, so dass das Phosphat aus der Matrixlösung nicht ausfällt.

Die erwähnten Funktionswerkstoffe werden, beispielsweise als Pulver, bevorzugt der bereits fertig vorbereiteten Matrixlösung zugesetzt und darin dispergiert.

Die so erhaltene Dispersion wird dann mittels üblicher Lakkiertechnik, d.h. beispielsweise durch Eintauchen, Besprühen, Fluten, TampoPrint oder Siebdruck, auf das zu beschichtende Substrat aufgebracht.

Anschließend wird die erhaltene Beschichtung getrocknet, und, je nach Anwendung, bei Temperaturen zwischen 150°C und 800°C, vorzugsweise 200°C bis 400°C, eingebrannt. Dabei ist darauf zu achten, dass der Temperaturbereich von 120°C bis 180°C langsam durchfahren wird. Die Haltezeiten auf der erreichten Endtemperatur liegen je nach Anwendungsfall und Schichtzusammensetzung zwischen einigen Minuten und einigen Stunden, wobei bei höheren Endtemperaturen lediglich kurze Haltezeiten erforderlich sind.

Bei der Wärmebehandlung wird das in der Matrixlösung vorliegende Monoaluminiumphosphat in feinst verteiltes Aluminiumphosphat (AlPO₄) umgewandelt, das danach in der Regel nanokristallin bis kristallin vorliegt. Bei Temperaturen unter 250°C bei der Wärmebehandlung kann auch ein amorpher Aluminiumphosphat-Anteil verbleiben. Weiter ist die erhaltene Funktionsbeschichtung vielfach porös, was eine Folge der Abspaltung von Wasser bei der Umwandlung von Monoaluminiumphosphat (Al(H₂PO₄)₃ in Aluminiumphosphat (AlPO₄) ist. Die Porosität liegt meist bei 5 Vol.% bis 15 Vol.%, es sind jedoch auch Werte von 30 Vol% erreichbar, wobei die Porenradien deutlich unter einem 1 µm (Nanoporosität) liegen

Die Rauhigkeit R_{z} bzw. Rₐ der erzeugten Funktionsbeschichtung liegt üblicherweise unter 8 µm bzw. unter 2 µm, hängt aber stark von dem eingesetzten Funktionswerkstoff und der eingesetzten Beschichtungstechnik ab.

Für die Trocknung empfiehlt sich im Übrigen eine Trocknung in trockener Luft, da die aufgebrachte Beschichtung aufgrund ihres relativ hohen Phosphorsäuregehaltes hygroskopisch ist.

Die zur Beschichtung eingesetzte Dispersion kann weiter neben den genannten Bestandteilen noch Zusätze enthalten, die bevorzugt bei der Wärmebehandlung pyrolisiert werden bzw. die sich dabei verflüchtigen. Dies sind beispielsweise Benetzungshilfsmittel wie Alkohole oder organische Säuren, Verflüssiger oder Verdickungsmittel wie Glykole für die Einstellung der rheologischen Eigenschaften der Dispersion bzw. der Beschichtung, Oxidationsmittel wie Hydroxylamin oder Nitrate, beispielsweise zur Vermeidung von Wasserstoff-Bildung, Phosphor-Inhibitoren wie Zimtaldehydthiosemicarbazol, oder Dispergierhilfsmittel.

Als Werkstoff für das mit der Beschichtung zu versehende Substrat werden beispielsweise Aluminiumlegierungen, Aluminiumdruckguss, Magnesiumlegierungen, Kupferlegierungen, Nikkellegierungen, Chromlegierungen, Edelstähle, Werkzeugstähle oder Sintermetalle eingesetzt.

Sofern diese Werkstoffe gegenüber einem chemischen Angriff durch Phosphorsäure empfindlich sind, kann zunächst eine Passivierung, beispielsweise eine konventionelle Phosphatierung, der Metalloberfläche erfolgen und/oder es können der Matrixlösung zusätzlich Phosphorsäure-Inhibitoren und Oxidationsmittel zugesetzt werden.

Die Wärmebehandlung bei Temperaturen zwischen 150°C bis 800°C erfolgt üblicherweise in einem Ofen, sie kann jedoch auch lokal durch oberflächliche Bestrahlung der Beschichtung mit einem Laser, einer Infrarot-Lampe oder einer UV-Lampe vorgenommen werden. Dies ist insbesondere dann zweckmäßig, wenn lediglich eine lokale Erwärmung der Beschichtung an großen oder schwer zugänglichen Bauteilen erreicht werden soll, oder wenn die Erwärmung des beschichteten Substrates möglichst vermieden werden soll.

Im Anschluss an die Wärmebehandlung kann dann noch eine Nachbearbeitung der erzeugten Funktionsbeschichtung, insbesondere ein Polieren oder ein nachträgliches Infiltrieren mit Graphit oder einem Gleitlack, beispielsweise in eine poröse Struktur der Funktionsbeschichtung, erfolgen. Diese Nachbehandlung kann der Implementierung einer zusätzlichen Funktion, beispielsweise der weiteren Verringerung des Reibwertes der Funktionsbeschichtung, dienen.

Die Dauer der Wärmebehandlung beträgt typischerweise insgesamt 15 Minuten bis 10 Stunden, meist 1 h bis 5 h.

Durch die Wärmebehandlung wird erreicht, dass die Matrixlösung zumindest weitgehend, vorzugsweise nahezu vollständig oder vollständig in ein Metallphosphat, beispielsweise Aluminiumphosphat oder Zirkoniumphosphat, überführt wird. In dieses Phosphat ist dann der Dispersion zugesetzte Funktionswerkstoff integriert.

Die Dicke der erzeugten Funktionsbeschichtung auf dem Substrat liegt bevorzugt zwischen 5 µm und 500 µm, insbesondere 10 µm bis 50 µm.

Im Übrigen sei betont, dass die erzeugte Matrixphase nach Abschluss der Wärmebehandlung möglichst weitgehend, vorzugsweise vollständig frei von Aluminiumoxid, insbesondere γ-Al₂O₃, ist.

Hinsichtlich der Zusammensetzung der zur Erzeugung der Beschichtung eingesetzten Dispersion sollte das Molverhältnis zwischen der Phosphorsäure und der in der Matrixlösung chemisch gelösten Metallkomponente, beispielsweise Aluminium, bezogen auf das Metallion zwischen 2:1 und 6:1, vorzugsweise 3:1 und 3,5:1, liegen.

Das Stoffmengenverhältnis der Matrixlösung zu dem Funktionswerkstoff in der Dispersion sollte zwischen 1:2 und 1:12, vorzugsweise zwischen 1:6 und 1:9, liegen.

Die fakultativ eingesetzten Phosphorsäure-Inhibitoren werden relativ zu der eingesetzten Phosphorsäure in einem Molverhältnis von 0 bis 1:50 verwendet. Für das ebenfalls fakultativ eingesetzte Oxidationsmittel beträgt das Molverhältnis von Oxidationsmittel zu Phosphorsäure bevorzugt 0 bis 1:10.

## Patentansprüche

1. Verfahren zur Erzeugung einer Funktionsbeschichtung auf einem Substrat, wobei mindestens ein Funktionswerkstoff in einer Matrixlösung mit einer flüssigen Komponente und einem Phosphat dispergiert, und die Dispersion in Form einer Beschichtung auf das Substrat aufgebracht wird, und wobei die Beschichtung mittels einer Wärmebehandlung in die Funktionsbeschichtung mit einer anorganische Matrixphase und mit dem darin integrierten Funktionswerkstoff überführt wird.

2. Verfahren nach Anspruch 1, **dadurch gekennzeichnet, dass** als flüssige Komponente Wasser oder eine Mischung von Wasser mit einen organischen Lösungsmittel, insbesondere einen Alkohol oder ein Glykol, und als Funktionswerkstoff ein pulverförmiger Funktionswerkstoff, insbesondere mit einer mittleren Teilchengröße von 10 nm bis 5 µm, oder ein faserförmiger oder whiskerförmiger Funktionswerkstoff eingesetzt wird.

3. Verfahren nach Anspruch 1 oder 2, **dadurch gekennzeichnet, dass** als Funktionswerkstoff ein Metall, ein Polymer, Graphit, ein Hartstoff wie ein Metallnitrid, ein Metalloxid, ein Metallcarbid, ein Metallcarbonitrid, ein Trockenschmierstoff oder eine Keramik, insbesondere Si, ZrO₂, Al₂O₃, SiO₂, TiO₂, TiN, Teflon, Polytetrafluorethylen, Polyethylen, Polyamid, Bornitrid, Siliziumnitrid, MoS₂, MoSi₂ oder Chromoxid, eingesetzt wird.

4. Verfahren nach Anspruch 1, **dadurch gekennzeichnet, dass** die Matrixlösung durch Zugabe von Phosphorsäure zu einer Metallverbindung, insbesondere einer Verbindung der Metalle Al, Zr, Ti, Fe, Mg oder Ca, erzeugt wird, wobei der Anteil der Phosphorsäure in der Matrixlösung zwischen 10 Vol.% und 40 Vol.%, insbesondere 15 Vol.% und 30 Vol.%, liegt.

5. Verfahren nach Anspruch 1 oder 4, **dadurch gekennzeichnet, dass** eine Aluminiumverbindung oder eine Zirkoniumverbindung, insbesondere ein Aluminiumoxid, ein Zirkoniumoxid, ein Aluminiumcarbonat, ein Zirkoniumcarbonat, Al(OH)₃, Zr(OH)₄, AlOOH, Aluminiumtriisopropylat oder Aluminiumtri-sek-butylat, in Phosphorsäure aufgelöst werden.

6. Verfahren nach einem der vorangehenden Ansprüche, **dadurch gekennzeichnet, dass** die Dispersion einen pH-Wert kleiner 4, insbesondere kleiner 2,5, aufweist, und/oder dass der pH-Wert derart eingestellt wird, dass das Phosphat in der Dispersion nicht ausfällt.

7. Verfahren nach einem der vorangehenden Ansprüche, **dadurch gekennzeichnet, dass** die Beschichtung während der Wärmebehandlung zumindest zeitweilig auf eine Temperatur zwischen 150°C bis 800°C, insbesondere 200°C bis 400°C, aufgeheizt wird.

8. Verfahren nach einem der vorangehenden Ansprüche, **dadurch gekennzeichnet, dass** die Wärmebehandlung in einem Ofen und/oder lokal durch oberflächliche Laserbestrahlung, IR-Bestrahlung oder UV-Bestrahlung der Beschichtung erfolgt.

9. Verfahren nach einem der vorangehenden Ansprüche, **dadurch gekennzeichnet, dass** die Beschichtung vor der Wärmebehandlung zunächst insbesondere in trockener Luft getrocknet wird, und dass danach die Wärmebehandlung über eine Zeitdauer von 15 min bis 20 h, insbesondere 1 h bis 5 h, erfolgt.

10. Verfahren nach einem der vorangehenden Ansprüche, **dadurch gekennzeichnet, dass** die Beschichtung durch Eintauchen, Besprühen, Fluten, TampoPrint oder Siebdruck auf eine Metalloberfläche oder eine Keramikoberfläche als Substrat aufgebracht wird.

11. Verfahren nach einem der vorangehenden Ansprüche, **dadurch gekennzeichnet, dass** die Matrixlösung durch die Wärmebehandlung zumindest weitgehend in ein Metallphosphat, insbesondere Aluminiumphosphat oder Zirkoniumphosphat, überführt wird.

12. Verfahren nach einem der vorangehenden Ansprüche, **dadurch gekennzeichnet, dass** der Matrixlösung vor der Beschichtung zusätzlich ein Benetzungsmittel und/oder ein Verflüssiger oder ein Verdickungsmittel und/oder ein Oxidationsmittel und/oder ein Phophorsäure-Inhibitor und/oder ein Dispergiermittel zugesetzt wird.

13. Verfahren nach einem der vorangehenden Ansprüche, **dadurch gekennzeichnet, dass** die Funktionsbeschichtung nach der Wärmebehandlung poliert und/oder mit einem weiteren Funktionswerkstoff, insbesondere Graphit oder einem Gleitlack, infiltriert wird.

14. Verfahren nach einem der vorangehenden Ansprüche, **dadurch gekennzeichnet, dass** das Molverhältnis zwischen der Phosphorsäure und den Metallionen der Metallverbindung in der Matrixlösung zwischen 2:1 und 6:1, insbesondere zwischen 3:1 und 3,5:1, liegt.

15. Verfahren nach einem der vorangehenden Ansprüche, **dadurch gekennzeichnet, dass** das Stoffmengenverhältnis der Matrixlösung zu dem Funktionswerkstoff in der Dispersion zwischen 1:2 und 1:12, insbesondere 1:6 und 1:9, liegt.

16. Funktionsbeschichtung auf einem Substrat, insbesondere hergestellt nach einem Verfahren nach einem der vorangehenden Ansprüche, mit einer anorganische Matrixphase, die zumindest weitgehend aus einem Phosphat besteht, und einem darin eingebetteten Funktionswerkstoff.

17. Funktionsbeschichtung nach Anspruch 16, **dadurch gekennzeichnet, dass** das Phosphat Aluminiumphosphat oder Zirkoniumphosphat ist.

18. Funktionsbeschichtung nach Anspruch 16 oder 17, **dadurch gekennzeichnet, dass** die Matrixphase zumindest weitgehend frei von Al₂O₃, insbesondere γ-Al₂O₃, ist.
